# NEW EUROPEAN PATENT SPECIFICATION

(11) **EP 2 436 255 B2**
(45) Date of publication and mention of the opposition decision: **27.12.2017**
(45) Mention of the grant of the patent: 04.06.2014
(21) Application number: 11182030.4
(22) Date of filing: 20.09.2011
(51) Int. Cl.: A01D 33/04, B07B 1/15, A01D 17/06

(54) **Device for separating soil, clod and / or stones from root vegetables or bulbs**
Vorrichtung zum Trennen von Erde, Klumpen und/oder Steinen von Wurzelgemüse oder Zwiebeln
Dispositif de séparation de terre, mottes et pierres de légumes à racine ou bulbes

(30) Priority: 30.09.2010 GB 201016419
(43) Date of publication of application: 04.04.2012
(73) Proprietor: Weston, David Booth, Boston, Lincs, PE20 1LY (GB)
(72) Inventor: Weston, David Booth, Boston, Lincs, PE20 1LY (GB)
(74) Representative: Orr, Robert

(56) References cited:
- WO-A1-01/33938
- DE- - 935 700
- DE- - 1 020 824
- DE- - 1 782 501
- DE-A1- 3 635 403
- DE-A1- 4 340 101
- DE-A1- 10 340 162
- DE-T2- 60 313 056
- GB-A- 2 432 097
- US- - 1 864 484
- US-A- 1 899 292
- US-A- 2 976 550
- US-A- 5 425 459
- US-A- 5 697 451
- Grimme-Firmenprospekt Kartoffelroder GT 170 mit Druckvermerk 03/08/2000 (auszugsweise), veröffentlicht im März 2008.
- Grimme-Prospekt "Verlese- und Sortiereinheiten RH-Kombi-Serie", Druckvermerk 10/07/2000, veröffentlicht Oktober 2007 (auszugsweise)
- Betriebsanleitung Einlagerungsmaschine RH 20/24; Druckvermerk MAN.01328, BA - 05.08-RH 20/24; veröffentlicht Mai 2008 (auszugsweise).

## Description

The present invention relates to a device for separating soil, clod and/or stones from root vegetables or bulbs. In particular, but not exclusively, the present invention relates to a device for separating soil, clod and/or stones from root vegetables or bulbs, the device comprising resiliently deformable rotatable members.

A variety of different types of devices for separating soil, clod and/or stones from root vegetables or bulbs are known in the agricultural and horticultural industries, for use in harvesting a crop of root vegetables or bulbs, such as potatoes, carrots and onions. The devices are generally referred to in the industry as separators, and are provided as part of a machine known as a harvester, which is used to dig up and separate the crop of root vegetables or bulbs. Soil containing the crop as well as 'clods' and stones is dug-up by the harvester, and the soil, clods and stones are then separated from the crop. The separators can also be incorporated into static machines provided in a storage warehouse or the like. Static machines are typically provided where it is desired to perform a further separation, say where the crop has been harvested under particularly wet conditions, resulting in significant volumes of soil, clods and/or stones remaining, mixed in with the harvested crop.

As will be discussed below, the separators of known harvesters comprise pairs of contra-rotating members which act to draw down the soil, clods and stones and also to grasp haulm (stems or stalks of the root crop) and weeds, whilst allowing the crop to pass over the top for collection. Indeed, it is accepted in the industry that the separators of a harvester require such contra-rotating rollers in order to perform the dual function of drawing down soil, clods and stones whilst allowing a crop of root vegetables or bulbs to pass over the top for collection. An even flow of root vegetables or bulbs over the surface of the separator is necessary in order to provide a good output rate of working, and also minimum damage to a crop that is easily bruised. As noted above, as well as soil, clod and stones, haulm and weeds are also drawn down between the pairs of contra-rotating rollers. This involves a process which, due to the length and bulk of this type of plant material, takes time, causing the flow of vegetables or bulbs over the device to be restricted.

In order to prevent the crop of root vegetables or bulbs from being drawn down between the contra-rotating rollers and thus being lost or damaged, it is necessary to position the upstream rollers in close proximity to the downstream contra-rotating rollers, particularly when soil conditions are dry. In this way and during use of the separator, the crop of root vegetables or bulbs, which have smooth outer surfaces compared to clods and stones, are not effectively gripped by the rollers. The vegetables or bulbs remain within an upper receiving space defined between the rollers, and simply rotate or move around within this space until they are displaced by further material passing along the separator. A significant disadvantage which ensues from this is that separated material (particularly stones and clods) have to pass through a restricted space defined between the rollers, causing significant wear and also involving a high power requirement to drive the rollers.

One existing type of separator is known as the 'Dahlmann' separator. Dahlmann type separators utilise pairs of contra-rotating rollers having a coating of an elastomeric material, one of the rollers having a smooth surface and the other having a helically extending flute. The rollers are oriented parallel to an intended direction of travel of a harvester incorporating the separator. The helical flutes act to urge the crop of root vegetables or bulbs along a length of the rollers, rearwardly relative to a direction of travel, for collection. Soil, clod and stones are drawn down between the rollers and returned to the ground. Dahlmann type separators have been found to be particularly effective in wet soil conditions, but can cause damage to the crop in dry soil conditions. Additionally, it has been found that Dahlmann type separators can suffer significant damage when large stones are fed into the separators, as they can damage the rollers or, in extreme cases, become lodged between the rollers.

Another type of known harvester is disclosed in UK Patent Publication No. GB2145612. The harvester comprises a separator in the form of two spaced parallel contra-rotatable members oriented transverse to an intended direction of travel of the harvester. One of the members is in the form of a roller having a rigid outer surface, and the other has a plurality of radially outwardly extending resiliently deformable projections and known as star wheel members. Soil, clod and stones are drawn down between the member having the resiliently deformable projections and the roller, whilst the crop of root vegetables or bulbs pass over the top of the roller. Separators of the type found in this form of harvester have been found to be particularly effective in dry soil conditions, where they result in less damage to the crop than Dahlmann type separators, but can experience difficulties of soil material adhering to the star wheel members in wet soil conditions.

Another known type of harvester is disclosed in International Patent Publication No. WO95/14370 and which comprises a separator having pairs of contra-rotating rollers that are also oriented transverse to an intended direction of travel of the harvester. One of the rollers is relatively rigid, having a smooth surface. The other roller is intended to be resiliently deformable and has an inner hub, an outer casing connected to the inner hub via supporting spokes, and conveying lips which are upstanding from the outer surface. The spokes are oriented generally tangentially to the inner hub. Soil, clods and stones are drawn down between the rollers, whilst the conveying lips on the resilient rollers urge the crop of root vegetables or bulbs rearwardly over the rigid roller. The outer casing of the deformable roller is intended to deform at locations between the spokes and/or by deflection of the spokes themselves, to permit the passage of large stones down between the rollers. The separator of this harvester seeks to address problems in Dahlmann type separators whereby large stones can result in significant damage, but in common with Dahlmann separators, has been found to cause damage to the crop in dry soil conditions. In particular, it has been found that the conveying lips can cause significant damage to the crop during passage along the separator.

US Patent No. US5425459 discloses a stone separation table which selectively separates and drops stones, clods, and dirt between selected rollers while conveying potatoes or other root crops from one side of the table to the other. The stone separation table incorporates sets of rollers including separating and spacing rollers of substantially the same diameter. The sets of rollers are coplanar forming a planar conveying level with all rollers driven in the same direction of rotation. The separating roller is constructed with projecting elements, either projecting fingers of a star roller or bristles of a brush roller for receiving stones, clods, and dirt for rotation downward and dropping in the separating passageway between the separating roller and spacer roller. The stone separation table is incorporated in a standard potato harvester or other root crop harvester at one of the horizontal conveying levels of the harvester.

Further types of harvesters have been proposed to address the problems of damage due to stones and effective crop harvesting with minimal damage, and which take account of the relative advantages and disadvantages of prior separators. These have included harvesters having different types of separators. For example, it is possible to provide a harvester having separators of both the Dahlmann type and that disclosed in GB2145612. The separator which is utilised depends upon the particular soil conditions. Other proposals have included a harvester including a Dahlmann type separator which is used in wet/heavy soil conditions and a bypass separator of another type such as that disclosed in GB2145612, which can be utilised in dry/less heavy soil conditions. Such systems are expensive, time-consuming to prepare for operation, and not popular in the industry.

It is amongst the objects of embodiments of the present invention to obviate or mitigate at least one of the foregoing disadvantages.

According to a first aspect of the present invention, there is provided a device for separating soil, clod and/or stones from root vegetables or bulbs as claimed in claim 1.

The applicant has recognised that, contrary to the general understanding of persons skilled in the art and indeed prior teaching in the field that contra-rotating rotatable members (typically in the form of rollers) are required for separating soil, clod and/or stones from root vegetables or bulbs, an effective separation can be achieved with rotatable members that rotate in the same direction. This is facilitated by rotation of a downstream roller in a device at a lower speed than an upstream roller. The present invention may provide numerous advantages over prior devices. These include that rotation of the rotatable members in the same direction reduces wear and the power required to drive the rotatable members. Rotation of the rotatable members in the same direction may also reduce the likelihood of the root vegetables or bulbs being drawn down between the rotatable members, and indeed of damage to the root vegetables or bulbs during passage along the device. Rotation of the rotatable members in the same direction may also permit a spacing between the adjacent rotatable members to be increased, compared to prior devices, thereby reducing the likelihood of damage to the rotatable members due to overly large clods or stones being drawn down, with consequent benefits in terms of power savings. Rotating the rotatable members in the same direction may also reduce the likelihood of the rotatable members gripping and drawing down haulm and weeds, allowing the device time to reduce and spread out the overall bulk of material being conveyed therealong. Rotating the second rotatable member at a lower speed than the first rotatable member may provide an enhanced gripping effect on soil, clods and/or stones to be drawn down. In particular, rotating the rotatable members at such different speeds may result in a net force being exerted on the soil, clods and/or stones which tends to draw them down between the rotatable members. This is achieved whilst maintaining the further advantages provided by rotation of the rotatable members in the same direction, discussed above.

The device comprises a third resiliently deformable rotatable member located adjacent to and downstream of the second rotatable member, the third rotatable member arranged to rotate in the same direction as the first and second rotatable members. The third rotatable member is arranged to rotate at a speed which is lower than the speed of rotation of the second rotatable member. The device may comprise a fourth resiliently deformable rotatable member located adjacent to and downstream of the third rotatable member, the fourth rotatable member arranged to rotate in the same direction as the first, second and third rotatable members. The fourth rotatable member may be arranged to rotate at a speed which is lower than the speed of rotation of the third rotatable member. The fourth rotatable member may be arranged to rotate at a speed which is lower than the speed of rotation of the second rotatable member. The device may comprise further downstream rotatable members, and the speed of rotation of the or each further downstream rotatable member may be different from, optionally less than, a speed of rotation of an adjacent upstream rotatable member. The device comprises a series or array of three or more resiliently deformable rotatable members. At least the first, second and third rotatable members in the array are arranged to rotate at a reduced speed in relation to its adjacent upstream rotatable member. This provides a staged reduction in the speed of rotation of at least the first, second and third rotatable members along a length of the device.

Reference is made herein to resiliently deformable rotatable members. It will be understood that the rotatable members are resiliently deformable in that the rotatable members may be deformable under an applied load, but return to a pre-deformation configuration or position after removal of the applied load. It will be understood that the applied load may be as a result of soil, clod, stones and/or other material being drawn down between the rotatable members and exerting a force thereon.

The resiliently deformable rotatable members are each of substantially the same radius, and may each describe the same outer diameter. The resiliently deformable members may each be resiliently deformable to the same or a similar degree/extent.

The ability of the rotatable members to resiliently support large deformations, relative to the radii of the rotatable members, may greatly reduce the likelihood of damage to the rotatable members during use of the device, particularly when clod and/or stones which are oversized relative to a spacing between the first and second rotatable members is drawn down. The rotatable members may each be capable of resiliently supporting a deformation of at least about 15% relative to a radius of the rotatable member to facilitate the passage of soil, clod and/or stones between the rotatable members. The rotatable members may each be capable of resiliently supporting a deformation of at least about 20%, optionally at least about 30%, and optionally at least about 40%; relative to a radius of the rotatable member, to facilitate the passage of soil, clod and/or stones between the rotatable members. The rotatable members may each be capable of resiliently supporting a deformation of up to about 40%, optionally up to about 50%, and optionally up to about 60%, relative to a radius of the rotatable member, to facilitate the passage of soil, clod and/or stones between the rotatable members.

The device may comprise a further rotatable member, which may be a roller, for separating weed and/or haulm, which is located adjacent the rotatable member of the group rotated in the same direction and provided furthest downstream in the device, and which further rotatable member is rotated in the opposite direction to the remainder of the rotatable members (and thus which is contra-rotated relative to the remaining rotatable members). The first, second and third rotatable members (and further rotatable members if provided) which are rotated in the same direction may act to separate soil, clods and/or stones but may not grip and draw down haulm and/or weeds, thereby allowing the action of the separator time to reduce and spread out the overall bulk of material being conveyed, to allow more effective haulm and weed separation at a downstream end by the contra-rotating roller. This may be achieved by the rotation of the first, second and third rotatable members in the same direction and with the second rotatable member rotating at a lower speed than the first rotatable member, and the third rotatable member rotating at a lower speed than the second. Further contra-rotating weed and/or haulm rotatable members may be provided. The contra-rotating rotatable member may be at least partly resiliently deformable, and may have an inner core and an outer surface layer, the outer surface layer of a material having a higher resilience than that of the inner core. Typical materials for the inner core include metals and metal alloys, and for the outer surface layer include elastomeric materials. The outer surface layer may have a thickness of up to around 50% of a radius of the rotatable member.

The rotatable members each have respective rotatable member axes about which the rotatable members rotate, the rotatable member axes spaced apart along a length of the device so as to define a desired spacing between external surfaces of the rotatable members. The rotatable members are arranged such that the spacings are adjustable. This may allow for adjustment of the device to take account of factors including: different soil conditions such as wet/dry conditions, heavy (e.g. clay based) or sandy soils; the typical or average size of the root vegetables or bulbs to be harvested; and the likelihood of relatively large clods, stones or other material being present. Reference is made herein to speeds of rotation of the rotatable members. Such references may be to the speed of rotation of the rotatable members about their respective axes.

The rotatable members are rollers. The rollers may each be generally cylindrical. The rollers have a circular profile in cross-section, and an external surface which is free from projections. The external surfaces of the rollers may therefore be smooth or relatively smooth. At least part of the rollers, optionally the external surfaces of the rollers, may be of a material having a relatively low coefficient of friction. Suitable materials include elastomeric materials such as polyurethane, synthetic and/or natural rubbers. The provision of rollers which are generally cylindrical, having a circular profile and an external surface which is free from projections, and optionally having external surfaces of a material having such a low coefficient of friction, may reduce a likelihood of damage to the root vegetables or bulbs during use of the device. This is due to there being a reduction in the likelihood of the root vegetable or bulb being gripped between the rollers and drawn down; and the surface being free from projections which might otherwise strike the root vegetable or bulb during rotation of the roller. In contrast, soil, clod and/or stones will be gripped by the rollers and drawn down, and the gripping effect on clods and stones will be enhanced as the clods/stones will tend to deform the rollers such that they are securely gripped. The device comprises scraper elements for cleaning the rollers. The scraper elements may take the form of scraper blades, and may be arranged with an edge adjacent to and/or in contact with a surface of the respective roller, for cleaning the roller during rotation thereof. The provision of rollers which are generally cylindrical, having a circular profile and an external surface which is free from projections may facilitate the use of such scraper elements.

Where there is a contra-rotating rotatable member for removing weed/haulm, the discharge location may be at or near an intersection between the contra-rotating rotatable member and the upstream member.

The device of the first aspect of the invention may include any of the features, options or possibilities set out elsewhere in this document.

According to a second aspect of the present invention, there is provided a harvester including a device for separating soil, clod and/or stones from root vegetables or bulbs according to the first aspect of the invention.

According to a third aspect of the present invention, there is provided a static machine for separating soil, clod and/or stones from root vegetables or bulbs, the machine comprising a device for separating soil, clod and/or stones from root vegetables or bulbs according to the first aspect of the invention.

Embodiments of the present invention will now be described, by way of example only, with reference to the accompanying drawings, in which:
Fig. 1 is a schematic side view of a device for separating soil, clod and/or stones from root vegetables or bulbs, in accordance with an embodiment of the present invention;
Figs. 2 to 4 are enlarged side views of rotatable members of the device shown in Fig. 1, illustrate the action of rotatable members to draw down a stone from a position shown in Fig. 2, where the stone is illustrated prior to being gripped by the rotatable members, to a position shown in Fig. 4, where the stone is illustrated immediately prior to release and return to the ground;
Fig. 5 is an enlarged side view of the rotatable members of the device shown in Fig. 1;
Fig. 6 is an enlarged side view of the rotatable members of the device shown in Fig. 1 and which is similar to Fig. 5, but which does not fall within the scope of the invention as claimed, the drawing showing the rotatable members arranged in pairs, with the downstream roller in each pair rotated at a lower speed than the upstream roller in each pair;
Fig. 7 is an enlarged side view of one of the rotatable members of the device of Fig. 1, showing how the member deforms to allow the passage of a stone during use of the device;
Fig. 8 is an enlarged side view of the rotatable members of the device shown in Fig. 1, illustrating a typical orientation of an optional contra-rotating member for separating weed/haulm relative to said members;
Fig. 9 is an enlarged side view of the rotatable members of the device shown in Fig. 1, illustrating a mechanism by which spacings between the rollers can be adjusted;
Fig. 10 is an enlarged side view of an array of rotatable members which may be provided in the device of Fig. 1, illustrating scraper elements for cleaning the rollers; and
Figs. 11, 12 and 13 are views of various alternative rotatable members which may be provided in the device of Fig. 1, the rotatable members of Figs. 11 and 13 falling outside the scope of the invention as claimed.

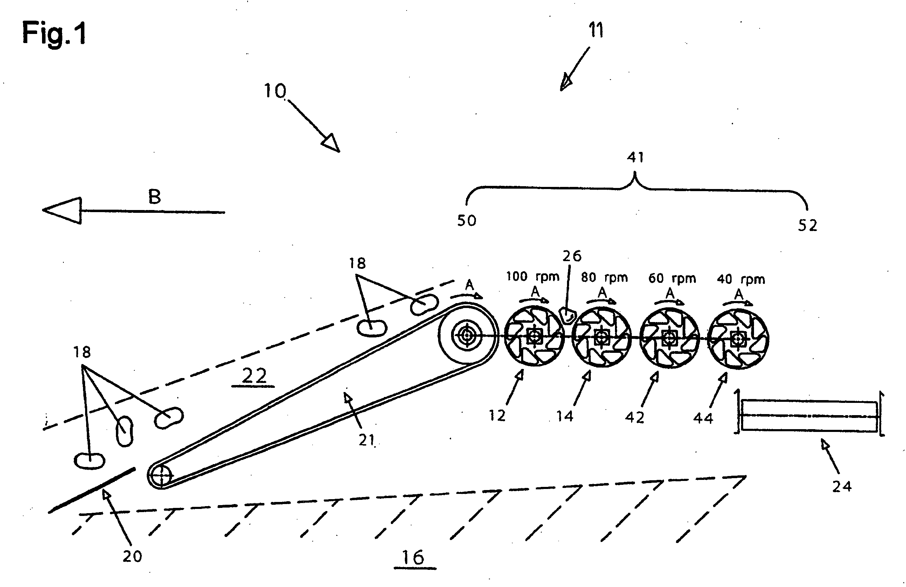

Turning firstly to Fig. 1, there is shown a schematic side view of a device for separating soil, clod and/or stones from root vegetables or bulbs, in accordance with an embodiment of the present invention, the device indicated generally by reference numeral 10. The device 10 takes the form of a separator, and is shown incorporated into a harvester, the harvester indicated generally by reference numeral 11. However, the separator 10 can equally be provided as part of a static machine (not shown). Static machines are typically provided in a warehouse or the like where the root vegetables or bulbs are to be stored, and may be utilised when it is desired to perform a further separation following harvesting of the crop. This might be necessary, for example, when the crop has been harvested under particularly wet conditions, resulting in significant volumes of soil, clods and/or stones remaining, mixed in with the harvested crop.

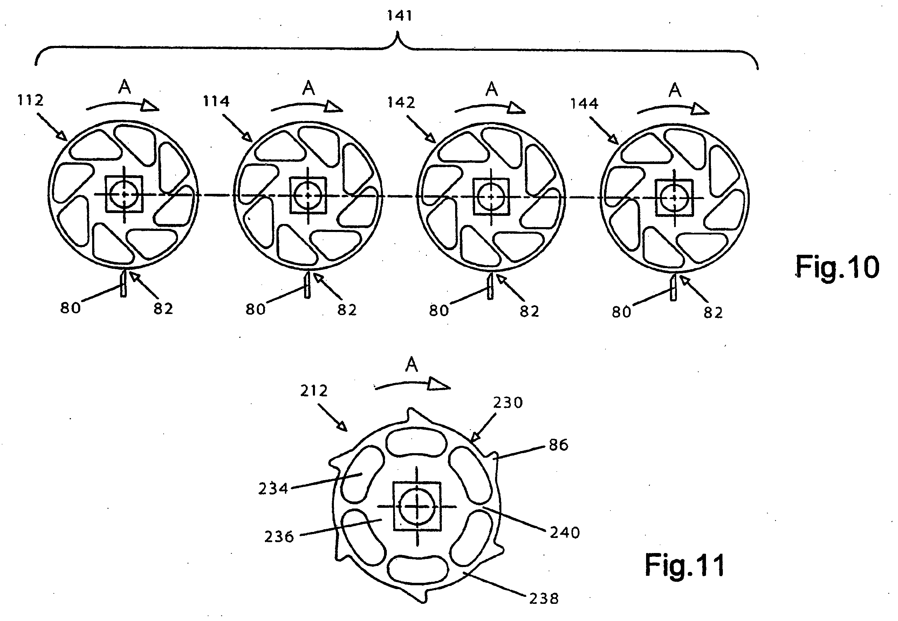

The separator 10 generally comprises first, second and third resiliently deformable rotatable members 12, 14 and 42, which are positioned adjacent to one another. The rotatable members 12, 14 and 42 each take the form of rollers, the first resiliently deformable roller 12 located upstream of the second resiliently deformable roller 14, and the third resiliently deformable roller 42 located downstream of the second roller 14. The separator 10 also comprises scraper elements for cleaning the rollers, which are shown in Fig. 10 and will be described below.

Contrary to the general understanding of persons skilled in the art and indeed prior teaching in the field of the invention that contra-rotating rollers are required for separating soil, clod and/or stones from root vegetables or bulbs, the applicant has discovered that an effective separation can be achieved with rotatable members that rotate in the same direction and with the downstream roller rotated at a lower speed than the upstream roller. Consequently, the first, second and third resiliently deformable rollers 12, 14 and 42 are arranged to rotate in the same direction, as indicated by the arrows A in Fig. 1. Additionally, the second roller 14 is rotated at a lower speed than the first roller 12, and the third roller 42 at a lower speed than the second roller 14. For example, in the illustrated embodiment, the roller 12 may be rotated at 100 rpm and the roller 14 at 80 rpm. It will be understood that the rollers 12 and 14 may be rotated at other speeds, if desired, and as will be discussed below.

In use, the harvester 11 incorporating the device 10 is typically towed in the direction of the arrow B across a field 16 containing a crop of root vegetables or bulbs 18. The crop 18 may be any suitable root vegetable or bulb including potatoes, onions and carrots, but the illustrated embodiments are discussed in relation to the harvesting of potatoes. Typically in the case of potatoes, a contra-rotating roller (not shown in Fig. 1) will be provided adjacent a downstream one of the rollers that are rotating in the direction A, to separate weeds and/or haulm from the potatoes, as will be described below. Such may not be necessary in the case of carrots, onions or other crops, where the tops of the carrots etc. protrude above ground, and the haulm can be removed prior to harvesting.

As the harvester 11 moves across the field 16, a share blade 20 digs up material 22 from the field (typically to a depth of around 15cm) which comprises soil, clod and/or stones as well as the root vegetables or bulbs 18, and transfers the material rearwardly, relative to the direction of travel, on to a web conveyor 21 of a type known in the art. The web conveyor 21 comprises a number of metal bars or rods (not shown) which are oriented perpendicular to a main axis of the conveyor, and acts to both perform an initial sieving operation on the material 22, sieving out loose soil, and also to transfer the material 22 on to the resiliently deformable roller 12. The depth of the material 22 on the web conveyor 21 thus reduces as it is transported along the conveyor, as indicated in Fig. 1, with loose soil falling back down on to the field 16. The roller 12 carries the material 22 to an interface region 28 between the rollers 12 and 14. The rollers 12 and 14, rotated in the same direction and at different speeds, act to draw down soil, stone and/or clods while the root vegetables or bulbs 18 pass thereover, for subsequent discharge at a downstream location on to a lateral conveyor 24, for collection. The action of the web conveyor 21 to sieve out loose soil, and of the rollers 12 and 14 to draw down soil, stone and/or clods, causes the level of the field 16 that has been dug up by the share blade 20 to increase towards the rear of the harvester 11, as indicated in the drawing.

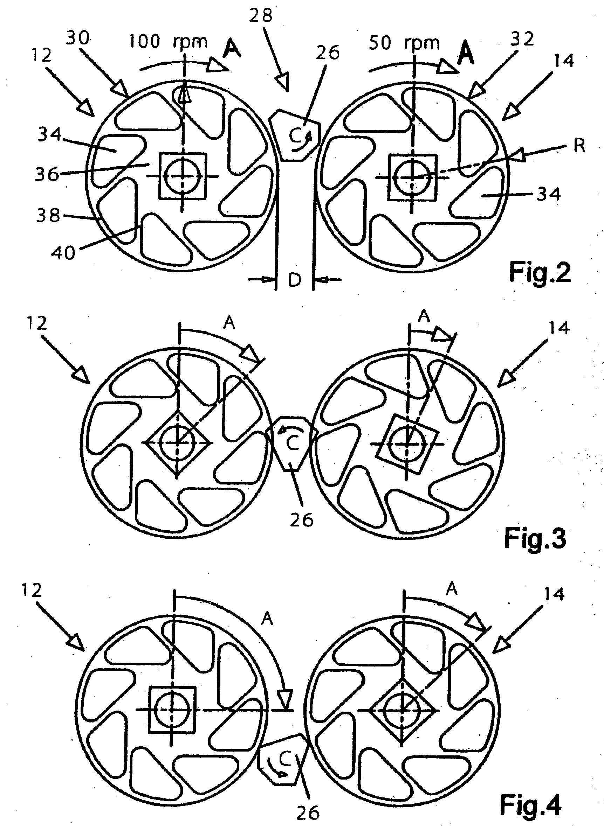

In Fig. 1, a stone 26 is shown prior to being drawn down between the rollers 12 and 14, for discharge back on to the surface of the field 16. Figs. 2 to 4 illustrate the action of the rollers 12 and 14 to draw down the stone 26 from the position shown in Fig. 2, where the stone is shown prior to being gripped by the rollers, to the position shown in Fig. 4, where the stone is shown immediately prior to release and return to the ground. In Figs. 2 to 4, the second roller is shown rotating at 50rpm, rather than 80rpm as in Fig. 1. This is for ease of illustration and understanding of the forces exerted on the stone 26 during passage between the rollers 12 and 14, although the rollers may be rotated at such speeds if desired. Thus turning firstly to Fig. 2, the stone 26 is shown located in the interface region 28 between the first and second rollers 12 and 14. The stone 26 has been carried in the material 22 transported up the share blade 20, web conveyor 21 and discharged on to the roller 12. The rollers 12 and 14 are shown in Fig. 2 in a common rotational position, and at a point where the stone 26 has fallen down the interface region 28 to a position where it is gripped between external surfaces 30 and 32 of the respective rollers.

The rollers 12 and 14 are shown in Fig. 3 a short time later, following a 1/8^{th} turn of the roller 12 through 45°. In the same time period, the roller 14 has only rotated a 1/16^{th} turn and thus through 22.5°. Consequently, a net force is exerted on the stone 26 tending to rotate the stone in the opposite direction to the rollers 12 and 14, as indicated by the arrow C. The stone is thus drawn downwardly between the rollers 12 and 14, in spite of the fact that the rollers are both rotating in the same direction A.

Fig. 4 shows the rollers 12 and 14 following a 1/4 turn of the roller 12 through 90°, during which time the roller 14 has only rotated a 1/8^{th} turn and thus through 45°. Continued rotation of the first and second rollers 12 and 14 in this manner acts to continuously draw down soil, clod and/or stones for discharge on to the field 16. It will be understood that similar forces are exerted on other materials including large clods (not shown), so that they are drawn down between the rollers 12 and 14. However and as will be described in more detail below, stones 26 which have a dimension that is larger than a minimum radial clearance D (Fig. 2) between the rollers 12 and 14 will tend to cause the rollers to deform to allow the stone to pass, whereas clods will typically tend to be crushed between the rollers, resulting in little or no deformation (depending upon factors including the inherent resistance of the clod to crushing relative to the resilience of the rollers, and the volume of material being drawn down between the rollers).

In contrast and in the case of the potatoes 18, their relatively smooth skin, in comparison to surfaces of the clod and stones 26, means that the potatoes are not gripped by the external surfaces 30 and 32 of the rollers 12 and 14. Consequently, the potatoes simply bounce around or rotate in the interface region 28 between the rollers 12 and 14, and remain there until displaced by further material 22 passing along the device 10.

To facilitate the action of drawing down the soil, clods and stones 26 whilst allowing the potatoes 18 to pass over the rollers 12 and 14, the rollers are each arranged so that they are capable of resiliently supporting a deformation of more than about 10% relative to a radius R (Fig. 2) of the roller to facilitate the passage of soil, clod and/or stones between the rollers. In preferred embodiments, the rollers 12 and 14 are each arranged so that they are capable of resiliently supporting a deformation of up to about 20% to 30%. In other words, the rollers 12 and 14 may be capable of resiliently deforming in such a fashion that a radius of the rollers is reduced by more than about 10%, optionally up to about 20% or 30%. The rollers 12 and 14 may each be capable of resiliently supporting a deformation of up to about 40%, optionally up to about 50%, or about 60%, relative to the radius R.

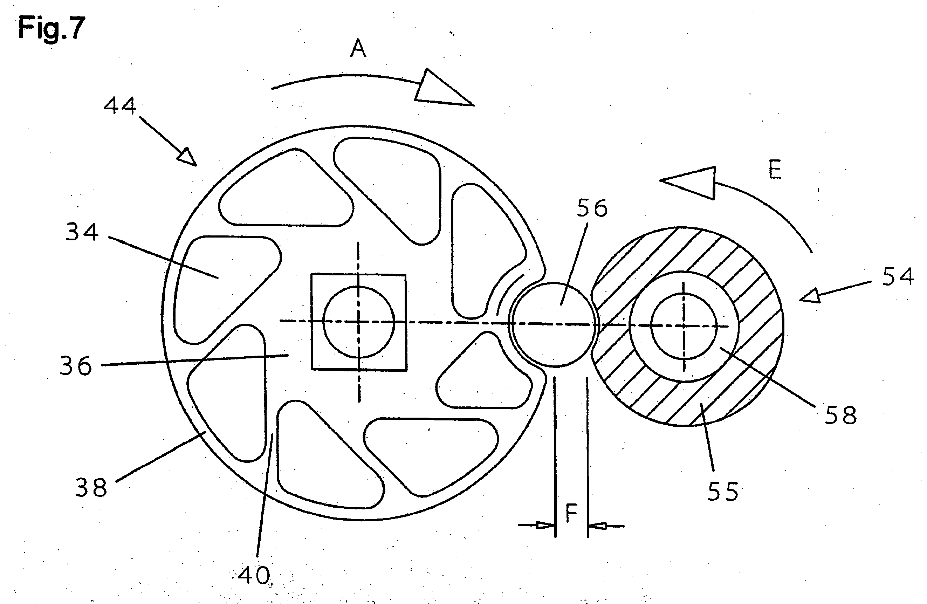

In the embodiment of Fig. 1, this is achieved by appropriate shaping of the rollers 12 and 14, and indeed selection of appropriate materials for forming the rollers. Suitable materials include elastomeric materials such as polyurethane. In the embodiment of Fig. 1, the rollers 12 and 14 are provided with a number of internal cavities 34, which allow the external surfaces 30 and 32 of the rollers to deform inwardly during passage of, for example, the stone 26. In more detail and referring to the roller 12 shown in Fig. 2, the roller comprises an inner hub portion 36 and an outer shell or casing 38, with spoke sections 40 extending between the hub portion 36 and the shell 38. The spoke sections 40 are oriented generally parallel to a tangent of the outer shell 38, which acts to assist deformation of the roller. In particular, the stone 26 will typically impart a generally radially directed load on the roller 12. Tangentially orienting the spoke sections 40 will promote a resilient collapsing of the roller 12 by deflection of the spoke sections. The cavities 34 are each formed between the inner hub region 36 and the outer shell 38 and bound by adjacent spoke sections 40, and extend axially along the roller 12. In use, the roller 12 can be deformed by application of a load at any point around a circumference of the outer shell 38, deformation occurring by inward deflection of the outer shell 38 itself, and/or by deflection of the spoke sections 40 as discussed above, as will be shown and described below with reference to Fig. 7.

As can be seen from Figs. 1 and 2, the first, second and third rollers 12, 14 and 42 are each generally cylindrical, having a circular profile (or circular shape in cross-section), and an external surface 30, 32 which is free from projections and thus smooth. This provides numerous advantages, including that the smooth external surfaces 30 and 32 do not tend to 'grip' the potatoes 18 during use and draw them down. Additionally, the lack of projections means that a tendency for the rollers 12, 14 and 42 to damage the potatoes 18 during use is greatly reduced compared to prior devices with rollers having projections, which strike the potatoes during rotation. The ability to utilise rollers 12, 14 and 42 which are free from projections is an advantage which flows from rotation of the rollers in the same direction and at different speeds, as discussed above. Furthermore, as will be shown and described below with reference to Fig. 10, providing first, second and third rollers 12, 14 and 42 which are each generally cylindrical, having a circular profile and an external surface 30, 32 which is free from projections, facilitates the use of scraper elements for keeping the rollers clean. Such is not possible in prior devices having rollers with projections.

It will be understood that, whilst not specifically described, the rollers 14 and 42, and indeed further such rollers in the device 10 are constructed in a similar fashion to the roller 12. Equally and as will be described below, it will be understood that other roller configurations may be employed.

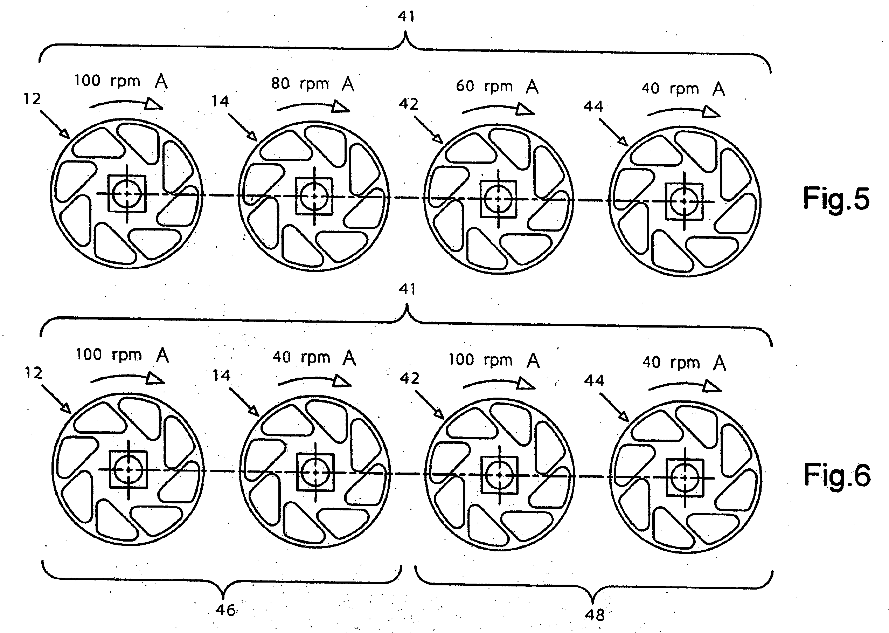

In the embodiment shown in Fig. 1, the resiliently deformable rollers 12 and 14 are arranged in an array 41 having the third roller 42 and a fourth roller 44, each of which is of the same radius R, and rotated in the same direction A as the first and second rollers. The third roller 42 is arranged to rotate at a lower speed than the second roller 14, and the fourth roller 44 at a lower speed than the third roller 42. In this way each downstream roller rotates at a lower speed than its adjacent upstream roller. Fig. 1, and also the enlarged view of Fig. 5, show the first to fourth rollers 12, 14, 42 and 44 rotated at respective speeds of 100rpm, 80rpm, 60rpm and 40rpm, to provide a staged speed reduction across the roller array 41. It will be understood however that the rollers in the array 41 may be rotated at different speeds. In an example which falls outside the scope of the claimed invention, which is shown in Fig. 6, the rollers in the array 41 may be arranged in pairs 46 and 48, with the downstream roller 14, 44 in each pair rotated at a lower speed than the upstream roller 12, 42 in each pair. This provides for a greater speed reduction between adjacent pairs of rollers in the array 41, when necessary or desired, by repeating speed reduction in pairs of rollers. For example and as shown in Fig. 6, the rollers 12 and 42 may be rotated at 100rpm and the rollers 14 and 44 at 40rpm. Such may provide an enhanced draw down effect on soil, clods and stones.

The roller array 41 has an upstream end 50 (Fig. 1) at which the material 22 is charged on to the array, and a downstream end 52 defining a discharge location for the potatoes separated from the soil, clod and/or stones 26 during passage of the material 22 along the array of rollers. As will be evident from the foregoing description, all of the resiliently deformable rollers 12, 14, 42 and 44 in the array 41 are arranged to rotate in the same direction A. An effective separating action occurs along the length of the array 41, such that the potatoes 18 that are discharged from the discharge end 52 are substantially free from soil, clods and stones, such having been separated and returned to the ground by the combined action of the rollers 12, 14, 42 and 44. However and as explained above, the device 10 can be provided with a contra-rotating rotatable member, and this is shown in Fig. 7. The drawing shows the fourth roller 44 in the roller array 41, together with a contra-rotating rotatable member in the form of a 'nip' roller 54, which is used to separate out any weeds, as well to remove the haulm from the potatoes 18. Although it is intended that the bulk of any soil, clods and stones 26 will be removed by the rollers in the array 41, a majority of any remaining soil, clods and stones will be separated and returned to the ground by the combined action of the roller 44 and the weed/haulm roller 54, which is rotated in the opposite direction, E, to the roller 44.

As mentioned above, Fig. 7 also illustrates the way in which the roller 44 deforms to allow the passage of, for example, a stone 56. The stone 56 has been shown as being circular, for illustration purposes, but it will be understood that the stone will typically have an irregular shape, such as the stone 26 shown in Figs. 2 to 4. Equally, whilst not described, each of the further rollers in the array 41 will deform in a similar fashion to the roller 44. However and as will be described below, the weed/haulm roller 54 is typically significantly less resiliently deformable than the roller 44, resulting in a more significant deformation of the roller 44 than would be the case where the stone 56 were drawn down between rollers in the array 41.

Fig. 7 shows the stone 56 at a point where the roller 44 and the weed/haulm roller 54 experiences the greatest deformation, and thus at the point of smallest clearance F between the undeformed rollers 44, 54. As mentioned above, deformation of the roller 44 occurs by a combination of deformation of the outer shell 38 in the region where the stone 56 contacts the roller, as well as by a deflection of the respective spoke sections 40. This deformation also causes a localised deformation of respective roller cavities 34, which effectively facilitates gripping and drawing down of the stone 56. In the case of the weed/haulm roller 54, this has an inner core 58 which is typically of a metal, and an outer layer 55 (typically up to around 10mm) which is typically of an elastomeric material. A small deformation of up to a maximum of around 10% relative to the radius of the roller 54 occurs during drawing down of the stone 56. The spacing F between an external surface of the contra-rotating weed/haulm roller 54 and the external surface of the adjacent upstream roller 44 of the array 41 is smaller than the spacings D between the external surfaces of the rollers 12, 14, 42, and 44 in the array.

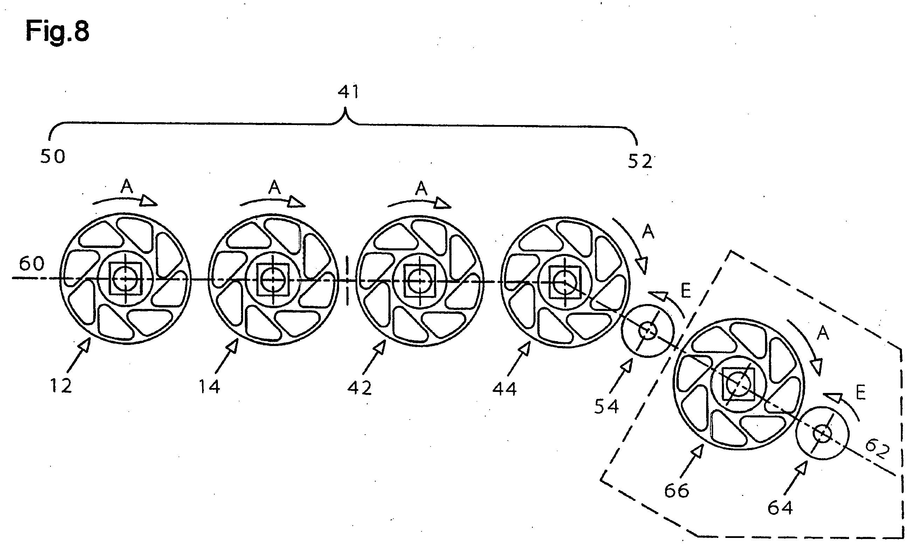

Fig. 8 shows the typical orientation of the contra-rotating weed/haulm nip roller 54 relative to the downstream roller 44 in the array 41. The rollers in the array 41 are in a common, horizontal plane 60, which facilitates transport of the potatoes 18 along the array to the discharge location 52. The weed/haulm roller 54 is in a plane 62 which is non-parallel to the plane 60, and which is declined relative to the plane 60, to facilitate gripping of the weeds and haulm (not shown) and subsequent passage of the potatoes 18 over the weed/haulm roller 54. If desired, a further weed/haulm roller 64 may be provided, which may be necessary if the anticipated bulk volume of potatoes 18 to be harvested would be sufficiently great that the roller 54 would not be able to remove all of the haulm. In this case, a further roller 66 of the type included in the array 41 is provided to transport the potatoes away from the first weed/haulm roller 54, and also to provide a further 'nip' with the second weed/haulm roller 64. The further roller 66 and second weed/haulm roller 64 are shown in the broken outlined box in Fig. 8.

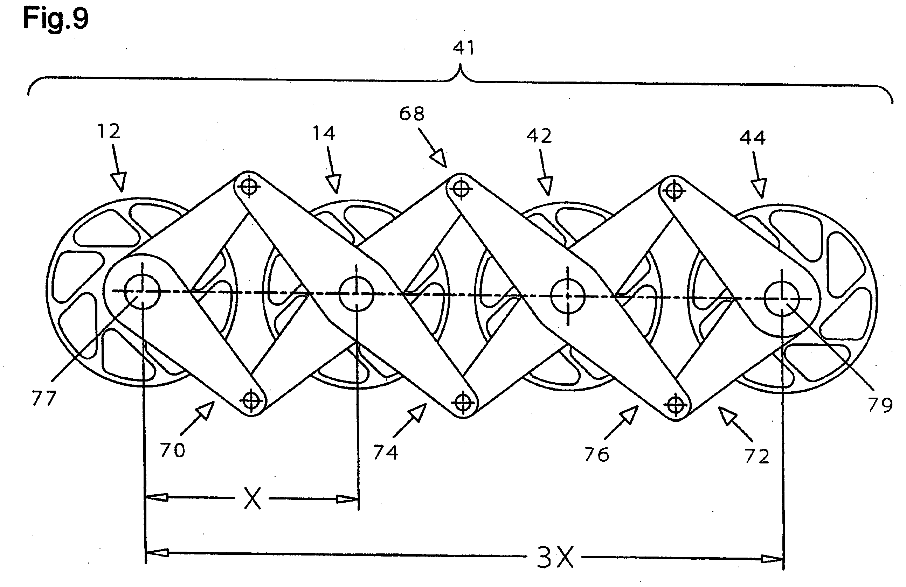

Turning now to Fig. 9, there is shown a mechanism 68 by which the spacings X between the rollers in the array 41 can be adjusted. Such might be desired to take account of factors including: different soil conditions such as wet/dry conditions, heavy (e.g. clay based) or sandy soils; the typical size of the root vegetables or bulbs to be harvested; and the likelihood of relatively large clods, stones or other material being present. The mechanism 68 is a scissors-type mechanism including upstream and downstream arm pairs 70 and 72 and intermediate arm pairs 74 and 76 which are connected in series between the end pairs 70 and 72. The arms in the pairs 70 to 76 are pivotally mounted on the respective rollers 12, 14, 42 and 44. Additionally, the arms in the pairs 70 to 76 are pivotally coupled together and to arms in a respective adjacent arm pair or pairs, such that the positions of the rollers in the array 41 can be adjusted simultaneously to vary the spacings X. Such may be achieved simply by moving shafts 77 and 79 of the upstream and downstream rollers 12 and 44 closer together or further apart.

Turning now to Fig. 10, there is shown a roller array 141, which may be provided in the device 10 in place of the roller array 41 of Fig. 1. Like components of the roller array 141 with the roller array 41 share the same reference numerals, incremented by 100. The array 141 is essentially the same as the array 41, and includes scraper elements in the form of scraper blades 80, which are positioned with their edges 82 closely adjacent to or in contact with the external surfaces of the rollers in the array 141. In this way and during rotation of the rollers in the array 141, the scraper blades 80 act to remove soil or clod residue which has become adhered to the surfaces of the rollers, particularly when clods are drawn down and crushed between the rollers.

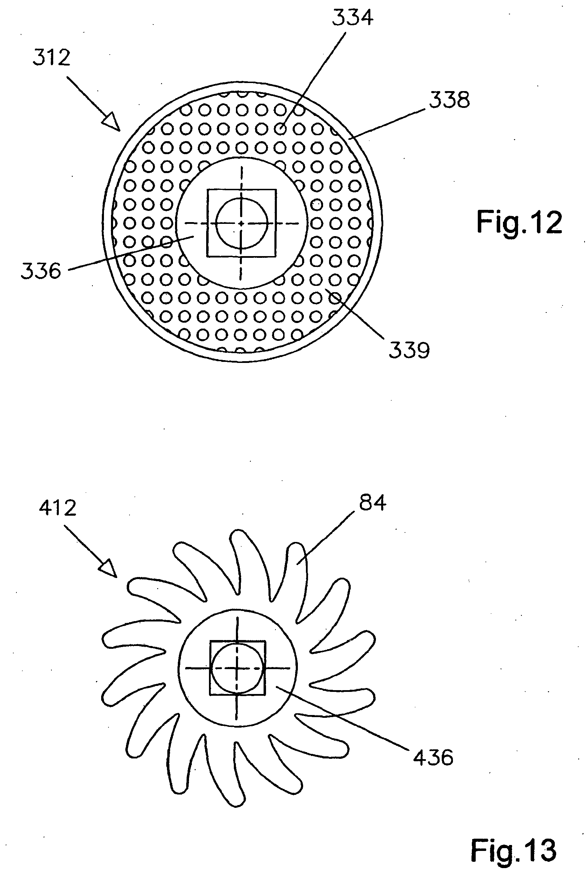

Finally and turning to Figs. 11, 12 and 13, there are shown various alternative rotatable members which may be utilised in the arrays 41 or 141 of Figs. 1 to 9 and 10, the rotatable members indicated generally by reference numerals 212, 312 and 412, respectively. The rotatable members shown in Figs. 11 and 13 fall outside the scope of the invention as claimed. It will be understood that each rotatable members in the array will typically be of a similar construction, although it is within the range of possibilities of the present invention to provide a device having a roller array with a plurality of different rotatable members types, selected from those shown in Figs. 1 to 10, 11, 12 and/or 13.

Thus considering Fig. 11, there is shown a rotatable member in the form of a roller 212 which is of similar construction to the roller 12, but in which spoke sections 240 extending between an inner hub section 236 and an outer shell 238 are substantially radially oriented. Internal cavities 234 of the roller 212 are also differently shaped from the cavities 34 of the roller 12. Consequently, the roller 212 will deform in a different fashion under the load of, for example, a stone being drawn down, and may be less resiliently deformable than the roller 12. In addition, the roller 212 has a projection or projections upstanding from its external surface 230. The projections may be resilient and may be axially extending ribs, fingers or flaps. In the illustrated example, the projections are resilient axially extending ribs 86, which act to urge potatoes 18 (or other vegetables or bulbs) from an interface region between adjacent rollers, and/or to discharge the potatoes 18 from the roller array. The ribs 86 additionally impart a force on soil, clods and stones 26 to assist in draw down between the rollers. However, the roller rib or ribs 86 may alternatively extend in a helical fashion around the roller 212.

Fig. 12 shows a rotatable member in the form of a roller 312 which has a larger number of internal cavities 334, an inner hub portion 336, an outer shell 338 and an inner core 339. The inner core 339 is annular and located between the inner hub portion 336 and the outer shell 338. The inner core 339 is of a foamed plastics material which includes the cavities 334. Typically, the inner core 339 will be of a material having greater resilience (and thus which is 'softer') than a material of the roller 12 of Fig. 1. Again, the roller 312 will perform differently to the roller 12 under the applied loading of a stone or the like, during draw down.

Fig. 13 shows a rotatable member 412 comprising a plurality of resiliently deformable fingers or arms 84 extending from an inner hub 436. The rotatable member 412 is of a type disclosed in GB2145612 discussed above, the fingers 84 acting both to urge potatoes 18 (or other vegetables or bulbs) from an interface region between adjacent rollers, and/or to discharge the potatoes 18 from the roller array; and to impart a force on soil, clods and stones 26 to assist in draw down between the rollers, as well as to impart an enhanced working action on clods to crush them.

Various modifications may be made to the foregoing without departing from the scope of the present invention as defined by the appended set of claims.

## Claims

1. A device (10) for separating soil, clod and/or stones (26, 56) from root vegetables or bulbs (18), the device comprising:
a plurality of resiliently deformable rotatable members (12, 14, 42, 44; 112, 114, 142, 144) which are arranged so that soil, stones and/or clods are drawn down between the rotatable members while the root vegetables or bulbs pass thereover, the rotatable members arranged in an array (41) having:
• an upstream end (50) at which material (22) comprising soil, clod and/or stones together with the root vegetables or bulbs is charged on to the array of rotatable members; and
• a downstream end (52) defining a discharge location for the root vegetables or bulbs separated from the soil, clod and/or stones during passage of the material along the array of rotatable members;
and in which:
the array includes at least a first resiliently deformable rotatable member (12, 112), a second resiliently deformable rotatable member (14, 114) positioned adjacent to the first rotatable member, the first rotatable member located upstream of the second rotatable member, and a third resiliently deformable rotatable member (42; 142) positioned adjacent to and downstream of the second rotatable member (14);
all of the resiliently deformable rotatable members in the array are arranged to rotate in the same direction (A);
the first and second resiliently deformable rotatable members are arranged such that the speed of rotation of the second rotatable member (14, 114) is lower than the speed of rotation of the first rotatable member (12, 112); and
the rotatable members (12, 14; 112, 114) in the array each have respective rotatable member axes about which the rotatable members rotate, the rotatable member axes spaced a part (X) along a length of the device so as to define desired spacings (D) between external surfaces of the rotatable members, and in which the rotatable members are arranged such that the spacings are adjustable;
**characterised in that**:
the rotatable members in the array are each of substantially the same radius (R);
the third rotatable member is arranged to rotate at a speed which is lower than the speed of rotation of the second rotatable member;
each of the resiliently deformable rotatable members in the array is in the form of a roller having a circular profile in cross-section and an external surface which is free from projections; and
the device comprises scraper elements (80) for cleaning the rollers, each scraper element arranged to clean a respective roller during rotation thereof.

2. A device as claimed in any preceding claim, in which the array comprises at least one further downstream rotatable member (44; 144), and in which the speed of rotation of the or each further downstream rotatable member is less than a speed of rotation of an adjacent upstream rotatable member (42; 142).

3. A device as claimed in any preceding claim, in which the rotatable members in the array are each capable of resiliently supporting a deformation of more than about 10% relative to the radius of the rotatable member, to facilitate the passage of soil, clod and/or stones between the rotatable members.

4. A device as claimed in claim 3, in which the rotatable members are each capable of resiliently supporting a deformation of up to about 60% relative to a radius of the rotatable member, to facilitate the passage of soil, clod and/or stones between the rotatable members.

5. A device as claimed in any preceding claim, in which external surfaces of the rotatable members are of a material having a relatively low coefficient of friction.

6. A device as claimed in any preceding claim, comprising a rotatable member (54) for separating weed and/or haulm, the weed and/or haulm rotatable member located adjacent the rotatable member (44) of the array provided furthest downstream in the device, and the weed and/or haulm rotatable member being arranged to rotate in the opposite direction (E) to the rotatable members in the array.

7. A device as claimed in claim 6, in which the discharge location is at an intersection between the contra-rotating weed and/or haulm rotatable member and the adjacent upstream rotatable member of the array.

8. A device as claimed in claim 7, in which the haulm rotatable member (54) has an axis about which it rotates, a spacing (F) between an external surface of the contra-rotating weed and/or haulm rotatable member (54) and the external surface of the adjacent upstream rotatable member (44) of the array being smaller than the spacings (D) between the external surfaces of the rotatable members in the array.

9. A harvester (11) comprising a device (10) for separating soil, clod and/or stones from root vegetables or bulbs as claimed in any preceding claim.

10. A static machine for separating soil, clod and/or stones from root vegetables or bulbs, the machine comprising a device (10) as claimed in any one of claims 1 to 8.

## Patentansprüche

1. Vorrichtung (10) zum Trennen von Ackerboden, Erdklumpen und/oder Steinen (26, 56) von Wurzelgemüse oder Knollen (18), wobei die Vorrichtung umfasst:
eine Mehrzahl nachgiebig verformbarer, rotierbarer Bauteile (12, 14, 42, 44; 112, 114, 142, 144), die so angeordnet sind, dass Ackerboden, Erdklumpen und/oder Steine zwischen den rotierbaren Bauteilen hinabgeführt werden, während das Wurzelgemüse oder die Knollen darüber gleiten, wobei die rotierbaren Bauteile in einer Gruppierung (41) angeordnet sind mit:
• einem vorgelagertem Ende (50), an welchem Material (22), umfassend Ackerboden, Erdklumpen und/oder Steine zusammen mit dem Wurzelgemüse oder den Knollen auf die Gruppierung rotierbarer Bauteile geladen wird; und
• einem nachgelagertem Ende (52), welches eine Entladestelle für das Wurzelgemüse oder die Knollen bildet, welche während des Durchlaufs entlang der Gruppierung rotierbarer Bauteile von Ackerboden, Erdklumpen und/oder Steinen getrennt wurden;
und in welcher
die Gruppierung wenigstens ein erstes nachgiebig verformbares, rotierbares Bauteil (12, 112), ein zweites nachgiebig verformbares, rotierbares Bauteil (14, 114), das benachbart zu dem ersten rotierbaren Bauteil positioniert ist, wobei das erste rotierbare Bauteil dem zweiten rotierbaren Bauteil vorgelagert angeordnet ist, und ein drittes nachgiebig verformbares, rotierbares Bauteil (42, 142), das benachbart zu dem zweiten rotierbaren Bauteil (14) und diesem nachgelagert positioniert ist, aufweist;
alle der nachgiebig verformbaren, rotierbaren Bauteile in der Gruppierung so angeordnet sind, dass sie in dieselbe Richtung (A) rotieren;
wobei die ersten und zweiten nachgiebig verformbaren, rotierbaren Bauteile so angeordnet sind, dass die Rotationsgeschwindigkeit des zweiten rotierbaren Bauteils (14, 114) geringer ist als die Rotationsgeschwindigkeit des ersten rotierbaren Bauteils (12, 112); und
wobei die rotierbaren Bauteile (12, 14, 112, 114) in der Gruppierung jeweils entsprechende rotierbare Bauteilachsen aufweisen, um welche die rotierbaren Bauteile rotieren, wobei die rotierbaren Bauteilachsen entlang einer Länge der Vorrichtung beabstandet (X) sind, um gewünschte Abstände (D) zwischen äußeren Oberflächen der rotierbaren Bauteile zu definieren, und in der die rotierbaren Bauteile so angeordnet sind, dass die Abstände anpassbar sind,
**dadurch gekennzeichnet, dass**:
die rotierbaren Bauteile in der Gruppierung alle im Wesentlichen denselben Radius (R) aufweisen;
das dritte rotierbare Bauteil angeordnet ist, um mit einer Rotationsgeschwindigkeit zu rotieren, welche geringer als die Rotationsgeschwindigkeit des zweiten rotierbaren Bauteils ist; und
die Vorrichtung Abstreifelemente (80) umfasst, um die Walzen zu säubern, wobei jedes Abstreifelement so angeordnet ist, dass eine entsprechende Walze hiervon während der Rotation gereinigt wird.

2. Vorrichtung nach einem der vorhergehenden Ansprüche, in der die Gruppierung wenigstens ein weiteres nachgelagertes rotierbares Bauteil (44; 144) umfasst, und in der die Rotationsgeschwindigkeit des oder der weiteren nachgelagerten rotierbaren Bauteile geringer ist als die Rotationsgeschwindigkeit eines benachbarten vorgelagerten rotierbaren Bauteils (42; 142).

3. Vorrichtung nach einem der vorhergehenden Ansprüchen, in der die rotierbaren Bauteile in der Gruppierung jeweils in der Lage sind, nachgiebig eine Deformation von mehr als circa 10% bezogen auf den Radius des rotierbaren Bauteils auszuhalten, um den Durchlauf von Ackerboden, Erdklumpen und/oder Steinen zu ermöglichen.

4. Vorrichtung nach Anspruch 3, in der alle rotierbaren Bauteile jeweils in der Lage sind, nachgiebig eine Deformation von bis zu 60% bezogen auf den Radius des rotierbaren Bauteils auszuhalten, um den Durchlauf von Ackerboden, Erdklumpen und/oder Steinen zu ermöglichen.

5. Vorrichtung nach einem der vorhergehenden Ansprüche, in der die äußeren Oberflächen der rotierbaren Bauteile aus einem Material sind, welches einen relativ kleinen Reibungskoeffizienten aufweist.

6. Vorrichtung nach einem der vorhergehenden Ansprüche, umfassend ein rotierbares Bauteil (54), um Gras und/oder Halme abzutrennen, wobei das rotierbare Gras- und/oder Halme-Bauteil benachbart zu dem rotierbaren Bauteil (44) der Gruppierung positioniert ist, das am weitesten stromabwärts in der Vorrichtung vorgesehen ist, und wobei das rotierbare Gras- und/oder Halme-Bauteil so angeordnet ist, dass es in der entgegengesetzten Richtung (E) zu den rotierbaren Bauteilen in der Gruppierung rotiert.

7. Vorrichtung nach Anspruch 6, in der die Entladestelle an der Schnittstelle zwischen dem entgegengesetzt rotierenden rotierbaren Gras- und/oder Halme-Bauteil und dem benachbarten stromaufwärts befindlichen rotierbaren Bauteil der Gruppierung ist.

8. Vorrichtung nach Anspruch 7, in der das Halme-Bauteil (54) eine Achse aufweist, um welche es rotiert, wobei ein Abstand (F) zwischen einer äußeren Oberfläche des entgegengesetzt rotierenden rotierbaren Gras- und/oder Halme-Bauteils (54) und der äußeren Oberfläche des benachbarten stromaufwärts rotierenden Bauteils (44) der Gruppierung kleiner ist als die Abstände (D) zwischen den äußeren Oberflächen der rotierbaren Bauteile in der Gruppierung.

9. Erntemaschine (11), umfassend eine Vorrichtung (10) zum Trennen von Ackerboden, Erdklumpen und/oder Steinen von Wurzelgemüse oder Knollen nach einem der vorhergehenden Ansprüche.

10. Ruhende Maschine zum Trennen von Ackerboden, Erdklumpen und/oder Steinen von Wurzelgemüse oder Knollen, umfassend eine Vorrichtung (10) nach einem der Ansprüche 1 bis 8.

## Revendications

1. Dispositif (10) destiné à séparer la terre, les mottes et/ou les pierres (26, 56) des légumes à racine ou des bulbes (18), le dispositif comprenant :
une pluralité d'éléments rotatifs élastiquement déformables (12, 14, 42, 44 ; 112, 114, 142, 144) qui sont agencés de sorte que la terre, les pierres et/ou les mottes soient tirée(s) vers le bas entre les éléments rotatifs tandis que les légumes à racine ou les bulbes passent au-dessus de ceux-ci, les éléments rotatifs étant agencés selon une rangée (41) ayant :
• une extrémité amont (50) à laquelle un matériau (22), comprenant de la terre, des mottes et/ou des pierres ainsi que les légumes à racine ou les bulbes, est chargé sur la rangée d'éléments rotatifs ; et
• une extrémité aval (52) définissant un emplacement de décharge pour les légumes à racine ou les bulbes séparés de la terre, des mottes et/ou des pierres pendant le passage du matériau le long de la rangée d'éléments rotatifs ;
et où :
la rangée comporte au moins un premier élément rotatif élastiquement déformable (12, 112), un deuxième élément rotatif élastiquement déformable (14, 114) positionné de manière adjacente au premier élément rotatif, le premier élément rotatif étant situé en amont du deuxième élément rotatif, et un troisième élément rotatif élastiquement déformable (42 ; 142) positionné de manière adjacente au deuxième élément rotatif (14) et en aval de celui-ci ;
l'ensemble des éléments rotatifs élastiquement déformables dans la rangée sont agencés de manière à tourner dans la même direction (A) ;
les premier et deuxième éléments rotatifs élastiquement déformables sont agencés de telle sorte que la vitesse de rotation du deuxième élément rotatif (14, 114) soit inférieure à la vitesse de rotation du premier élément rotatif (12, 112) ; et
les éléments rotatifs (12, 14 ; 112, 114) dans la rangée ont chacun des axes d'éléments rotatifs respectifs autour desquels les éléments rotatifs tournent, les axes d'éléments rotatifs étant espacés (X) sur une longueur du dispositif de manière à définir des espacements souhaités (D) entre des surfaces externes des éléments rotatifs, et dans lequel les éléments rotatifs sont agencés de telle sorte que les espacements soient réglables ;
**caractérisé en ce que** :
les éléments rotatifs dans la rangée ont chacun sensiblement le même rayon (R) ;
le troisième élément rotatif est agencé pour tourner à une vitesse qui est inférieure à la vitesse de rotation du deuxième élément rotatif ;
chacun des éléments rotatifs élastiquement déformables dans la rangée est en forme de rouleau ayant un profil circulaire en section transversale et une surface externe qui est exempte de projections ; et
le dispositif comprend des éléments de raclage (80) destinés à nettoyer les rouleaux, chaque élément de raclage étant agencé pour nettoyer un rouleau respectif durant sa rotation.

2. Dispositif tel que revendiqué dans l'une des revendications précédentes, dans lequel la rangée comprend au moins un élément rotatif aval supplémentaire (44 ; 144), et dans lequel la vitesse de rotation de l'élément rotatif aval supplémentaire ou de chaque élément rotatif aval supplémentaire est inférieure à une vitesse de rotation d'un élément rotatif amont adjacent (42 ; 142).

3. Dispositif tel que revendiqué dans l'une des revendications précédentes, dans lequel les éléments rotatifs dans la rangée sont chacun aptes à supporter de manière élastique une déformation supérieure à environ 10% par rapport au rayon de l'élément rotatif, afin de faciliter le passage de la terre, des mottes et/ou des pierres entre les éléments rotatifs.

4. Dispositif tel que revendiqué dans la revendication 3, dans lequel les éléments rotatifs sont chacun aptes à supporter de manière élastique une déformation allant jusqu'à environ 60% par rapport à un rayon de l'élément rotatif, afin de faciliter le passage de la terre, des mottes et/ou des pierres entre les éléments rotatifs.

5. Dispositif tel que revendiqué dans l'une des revendications précédentes, dans lequel les surfaces externes des éléments rotatifs sont faites d'un matériau ayant un coefficient de frottement relativement faible.

6. Dispositif tel que revendiqué dans l'une des revendications précédentes, comprenant un élément rotatif (54) destiné à séparer les mauvaises herbes et/ou les fanes, l'élément rotatif pour mauvaises herbes et/ou pour fanes étant situé de manière adjacente à l'élément rotatif (44) de la rangée prévue le plus en aval dans le dispositif, et l'élément rotatif pour mauvaises herbes et/ou pour fanes étant agencé de manière à tourner dans la direction opposée (E) aux éléments rotatifs dans la rangée.

7. Dispositif tel que revendiqué dans la revendication 6, dans lequel l'emplacement de décharge est à une intersection entre l'élément rotatif pour mauvaises herbes et/ou pour fanes contrarotatif et l'élément rotatif amont adjacent de la rangée.

8. Dispositif tel que revendiqué dans la revendication 7, dans lequel l'élément rotatif pour mauvaises herbes (54) a un axe autour duquel il tourne, un espacement (F) entre une surface externe de l'élément rotatif pour mauvaises herbes et/ou pour fanes contrarotatif (54) et la surface externe de l'élément rotatif amont adjacent (44) de la rangée étant inférieur aux espacements (D) entre les surfaces externes des éléments rotatifs dans la rangée.

9. Moissonneuse (11) comprenant un dispositif (10) destiné à séparer la terre, les mottes et/ou les pierres des légumes à racine ou des bulbes tel que revendiqué dans l'une des revendications précédentes.

10. Machine statique destinée à séparer la terre, les mottes et/ou les pierres des légumes à racine ou des bulbes, la machine comprenant un dispositif (10) tel que revendiqué dans l'une quelconque des revendications 1 à 8.
